(19) Europäisches Patentamt European Patent Office Office européen des brevets

(11) **EP 2 249 045 A2**

(12) **EUROPÄISCHE PATENTANMELDUNG**

(43) Veröffentlichungstag:
**10.11.2010 Patentblatt 2010/45**

(51) Int Cl.:
***F04D 29/68*** *(2006.01)*

(21) Anmeldenummer: **10008713.9**

(22) Anmeldetag: **06.10.2004**

(84) Benannte Vertragsstaaten:
**DE FR GB**

(30) Priorität: **26.11.2003 DE 10355240**

(62) Dokumentnummer(n) der früheren Anmeldung(en) nach Art. 76 EPÜ:
**04023822.2 / 1 536 146**

(71) Anmelder: **Rolls-Royce Deutschland Ltd & Co KG 15827 Blankenfelde-Mahlow (DE)**

(72) Erfinder: **Gümmer, Volker 15831 Mahlow (DE)**

(74) Vertreter: **Weber, Joachim Hoefer & Partner Patentanwälte Pilgersheimer Strasse 20 81543 München (DE)**

Bemerkungen:
Diese Anmeldung ist am 20-08-2010 als Teilanmeldung zu der unter INID-Code 62 erwähnten Anmeldung eingereicht worden.

(54) **Strömungsarbeitsmaschine mit Fluidentnahme**

(57) Strömungsarbeitsmaschine mit zumindest einem Rotor 6, der mehrere an einer rotierenden welle befestigte Rotorschaufeln 8 umfasst, sowie mit einem von einer Nabe 11 und einem Gehäuse 1 gebildeten Ringkanal 10, welcher unter Durchströmung des Rotor 6 und/oder eines Stators 7 von einem Fluid durchströmt wird, wobei Mittel zur Entnahme von Fluid an mindestens einer Schaufel 8,9 einer Schaufelreihe des Rotors 6 und/oder des Stators 7 an aerodynamisch kritischen Orten auf der Saugseite vorgesehen sind, wobei sich die Anordnung der Mittel zur Fluidentnahme an Meridianstromlinien orientiert, die aus einer zwischen der Nabe 11 und dem Gehäuse 1 äquidistanten Teilung der Ringkanalmittelorthogonalen hervorgehen, wobei jede Ringkanalmittelorthogonale durch eine Senkrechte auf der mittleren Meridianstromlinie des Ringkanals gegeben ist, wobei zur gezielten Beeinflussung der dreidimensionalen Strömung die Mittel zur Fluidentnahme nicht punktuell, sondern entlang einer Meridianstromlinie (d.h. in Merdianströmungsrichtung) in einem definierten Bereich S verteilt angelegt sind, wobei der Bereich S auf einer Meridianstromlinie ein Maximum Sx annimmt, wobei der Bereich S in meridianstromlinienorthogonaler Richtung zu wenigstens einer der Ringkanalwände (Nabe 11 oder Gehäuse 1) hin stufenweise oder kontinuierlich abnimmt und somit eine variable Intensität der Fluidentnahme entlang der Schaufelhöhe zwischen Nabe und Gehäuse ermöglicht ist.

Fig. 15    Definition "Saugseite Intensitätsvariable Fluidentnahme (SIFE)"

EP 2 249 045 A2

**Beschreibung**

Die vorliegende Erfindung bezieht sich auf Strömungsarbeitsmaschinen, wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es kann ein Gehäuse existieren, welches die Durchströmung des Rotors und Stators mit einem Fluid nach außen begrenzt.

Die aerodynamische Belastbarkeit und der Wirkungsgrad von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt.

Der Stand der Technik schlägt gegen dieses fundamentale Problem vor, die Grenzschicht des Fluids zu entfernen. Abgesehen von dieser sehr allgemeinen Vorgabe sind die vorbekannten Lösungen trivial und nur bedingt effektiv.

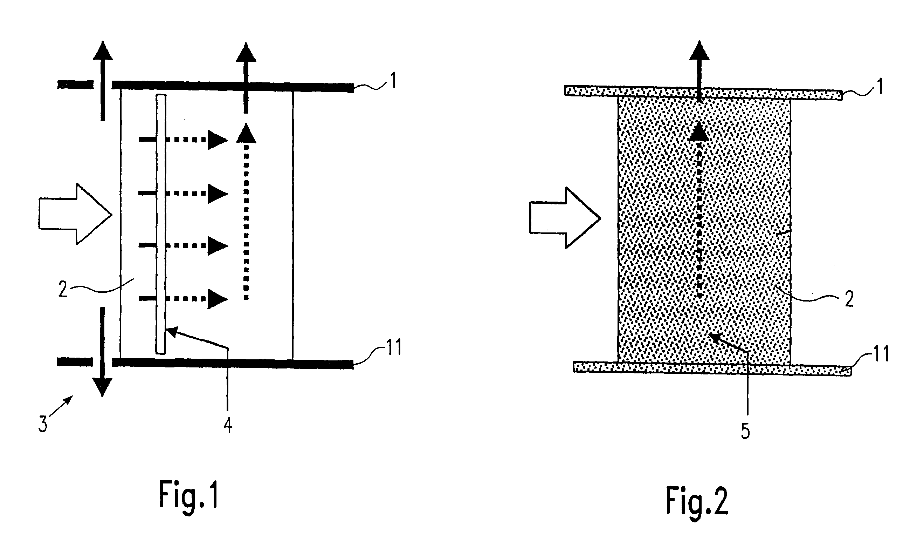

Die Fig. 1 und 2 zeigen in schematischer Darstellung die aus dem Stand der Technik bekannten Lösungen. Dabei zeigt die Fig. 1 in schematischer Darstellung ein Gehäuse 1 und eine Nabe 11, zwischen welchen ein Fluid, wie durch den großen Pfeil dargestellt, von links anströmt. Das Bezugszeichen 2 zeigt in schematischer Darstellung eine Schaufel, deren sichtbarer Bereich die "Saugseite" bildet. Wie durch die nach oben gerichteten Pfeile der Fig. 1 gezeigt, erfolgt eine lokale Luftentnahme auf der Schaufelsaugseite und im Axialspalt in achsensymmetrischer Anordnung. Der nach unten gerichtete, linke Pfeil zeigt eine Luftentnahme, die bei einem Rotor oder Stator durch einen Umfangsschlitz 3 vor der Schaufel erfolgt. Das Bezugszeichen 4 zeigt eine Lösung, bei welcher bei einem Stator über einen Schlitz und bei einem Rotor über eine Perforation, einen Schlitz, Löcher oder einen Staueinlauf Luft entnommen wird.

Die Fig. 2 zeigt mit dem nach oben gerichteten Pfeil eine globale Luftentnahme durch poröse Schaufeloberflächen. Das Bezugszeichen 5 bezeichnet einen Stator mit einem feinporigen, schwitzfähigen Werkstoff.

Der Stand der Technik beschreibt somit unterschiedliche Methoden, die eine in Strömungsrichtung punktuell begrenzte Entnahme der Grenzschicht durch Schlitze oder Löcher auf der Schaufelsaugseite oder durch achsensymmetrische Schlitze an den Seitenwänden (Nabe, Gehäuse) vor der Schaufel vorsehen. Dabei ist, wie erwähnt, auch vorgeschlagen worden, bei Statoren die Luftabfuhr auf einer über die ganze Schaufeloberfläche verteilten, globale Grenzschichtabsaugung durch feinporiges Material vorzunehmen.

Diese beschriebenen Maßnahmen besitzen entweder keinerlei spezifische Ausrichtung auf strömungstechnisch besonders problematische Zonen innerhalb der Schaufelpassage oder orientieren sich an der einfachen Vorstellung von zweidimensionalen Profilumströmungen, ohne Berücksichtigung der komplizierten dreidimensionalen Strömungsvorgänge im Seitenwandbereich einer Schaufel (nahe an einer Nabe oder an einem Gehäuse).

Üblicherweise wird beim Stand der Technik die Grenzschicht zunächst ins Schaufelinnere geführt und dann aus der Schaufel und dem Ringkanal der Strömungsarbeitsmaschine entfernt.

Lediglich eine Lösung sieht die Absaugung auf der Schaufelsaugseite und ein direktes Wiedereinströmen an der Schaufelspitze derselben Schaufel vor.

Weiterhin existieren im Stand der Technik Entwürfe, die Umfangsschlitze vor oder hinter einer Schaufelreihe an einer Nabe oder einem Gehäuse vorsehen, um die dortige Seitenwandgrenzschicht abzusaugen. Diese Maßnahme richtet sich allein auf die Reduzierung der Grenzschichtdicke am Schaufeleintritt ohne spezifische Ausrichtung auf besonders problematische Seitenwandzonen innerhalb der Schaufelpassage.

Der oben beschriebene Stand der Technik ist schriftlich in nachfolgenden Veröffentlichungen dokumentiert.

Zur Absaugung auf der Schaufeloberfläche durch Löcher, Einzelschlitze oder poröse Zonen sind die folgenden US-Patente zu nennen:

US 2,870,957
US 2,720,356
US 3,694,102
US 3,993,414
US 5,904,470
US 5,480,284

Die Absaugung an der Nabe oder am Gehäuse durch Umfangsschlitze vor oder hinter der Schaufelreihe zeigen folgen Veröffentlichungen:

Schuler et al.: Design, Analysis, Fabrication and Test of an Aspirated Fan Stage, ASME Paper 2000-GT-618, und Merchant et al.: Aerodynamic Design and Analysis of a High Pressure Ratio Aspirated Compressor Stage, ASME Paper 2000-GT-619.

Als nachteilig erweist es sich beim Stand der Technik, dass die existierenden Lösungen keine hochwirksamen und insbesondere hinsichtlich des Wirkungsgrades der Strömungsarbeitsmaschine günstige Lösungen bilden. Vielmehr sind die existierenden Absaugekonzepte vergleichsweise primitiv und sehen entweder die alleinige Absaugung der Profilgrenzschichten auf der Schaufeloberfläche vor oder kombinieren dies mit einer Absaugung vor der Schaufelreihe durch achsensymmetrische Ringschlitze an Nabe oder Gehäuse.

Der Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtentfernung sowie einen hohen Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Die erfindungsgemäße Strömungsarbeitsmaschine kann eine oder mehrere Stufen mit jeweils einem Rotor und einem Stator umfassen, in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor kann mit oder ohne Deckband am äußeren Schaufelende ausgeführt sein. Der erfindungsgemäße Stator besteht aus einer Anzahl feststehender Schaufeln, die nabenseitig und gehäuseseitig mit festem oder freiem Schaufelende ausgeführt sein können.

Die erfindungsgemäß vorgesehene Rotortrommel und die Beschaufelung sind üblicherweise von einem Gehäuse umgeben, in anderen Fällen (z. B. bei Propellern oder Schiffsschrauben) existiert kein Gehäuse.

Erfindungsgemäß kann die Strömungsarbeitsmaschine auch einen Stator vor dem ersten Rotor aufweisen, ein so genanntes Vorleitrad.

Erfindungsgemäß kann mindestens ein Stator oder Vorleitrad abweichend von der unbeweglichen Fixierung auch drehbar gelagert sein, um den Anströmungswinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Erfindungsgemäß kann die Strömungsarbeitsmaschine alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Entnahme von Fluid an mindestens einer Schaufel einer Schaufelreihe des Rotors und/oder des Stators an nicht-achsensymmetrisch angeordneten, aerodynamisch kritischen Orten auf Schaufelspitzen- und Ringkanaloberflächen (SRO) umfasst.

Alternativ oder zusätzlich zu Fluidentnahmevorrichtungen an SRO weist die Strömungsarbeitsmaschine erfindungsgemäß an mindestens einer Schaufel einer Statorreihe Mittel zur Fluidentnahme auf, die auf der Schaufelsaugseite in Meridianströmungsrichtung nicht punktuell, sondern über einen definierten Bereich verteilt angelegt sind, und deren Meridianerstreckung in Meridianstromlinien oder orthogonaler Richtung zu wenigstens einer der Ringkanalwände (Nabe oder Gehäuse) hin abnimmt (saugseitige, intensitätsvariable Fluidentnahme SIFE).

Im Folgenden wird die Erfindung anhand von Ausführungsbeispielen in Verbindung mit den Figuren beschrieben. Dabei zeigt:

Fig. 1             eine schematische Darstellung des Standes der Technik,

Fig. 2             eine abgewandelte Darstellung eines weiteren aus dem Stand der Technik bekannten Ausführungsbeispiels,

Fig. 3             eine schematische Darstellung des erfindungsgemäßen Grundkonzepts,

Fig. 4             eine weitere Darstellung unterschiedlicher erfindungsgemäßer Varianten,

Fig. 5             verschiedene Varianten und Konfigurationen der erfindungsgemäßen Strömungsarbeitsmaschine,

Fig. 6             eine Darstellung zur erfindungsgemäßen Definition des Begriffs SRO,

Fig. 7             eine weitere Darstellung zur erfindungsgemäßen Definition von SRO,

Fig. 8 bis 10     unterschiedliche Ausgestaltungsformen von Kammern zur Abführung des Fluids vornehmlich vom Gehäuse aus,

Fig. 11 bis 13     Ausgestaltungsvarianten analog Fig. 8 bis 10 mit Kammern zur Abführung des Fluids vornehmlich von der Nabe aus,

Fig. 14 bis 16     erfindungsgemäße Vorrichtungen zur saugseitigen, intensitätsvariablen Fluidentnahme (SIFE),

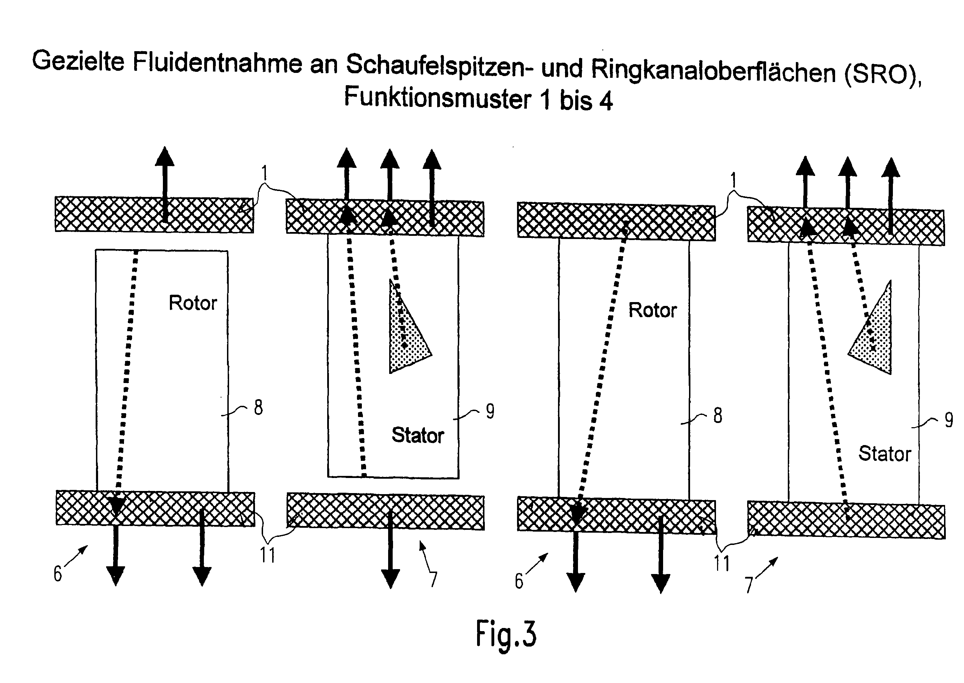

Die Fig. 3 zeigt in stark vereinfachter Darstellung die erfindungsgemäße Lösung an vier unterschiedlich konfigurierten Schaufelreihen, welche jeweils einen Rotor 6 bzw. einen Stator 7 umfassen, die mit Rotorschaufeln 8 bzw. Statorschaufeln 9 versehen sind. Mit dem Bezugszeichen 1 wird in stark vereinfachter Darstellung ein Gehäuse oder ein außen liegendes Deckband wiedergegeben. Das Bezugszeichen 11 kennzeichnet eine Rotortrommel oder ein innen liegendes Deckband. Dargestellt ist die Saugseite der jeweiligen Schaufel. Auf Statoren ist eine Zone für saugseitige, intensitätsvariable Fluidentnahme (SIFE) vorgesehen.

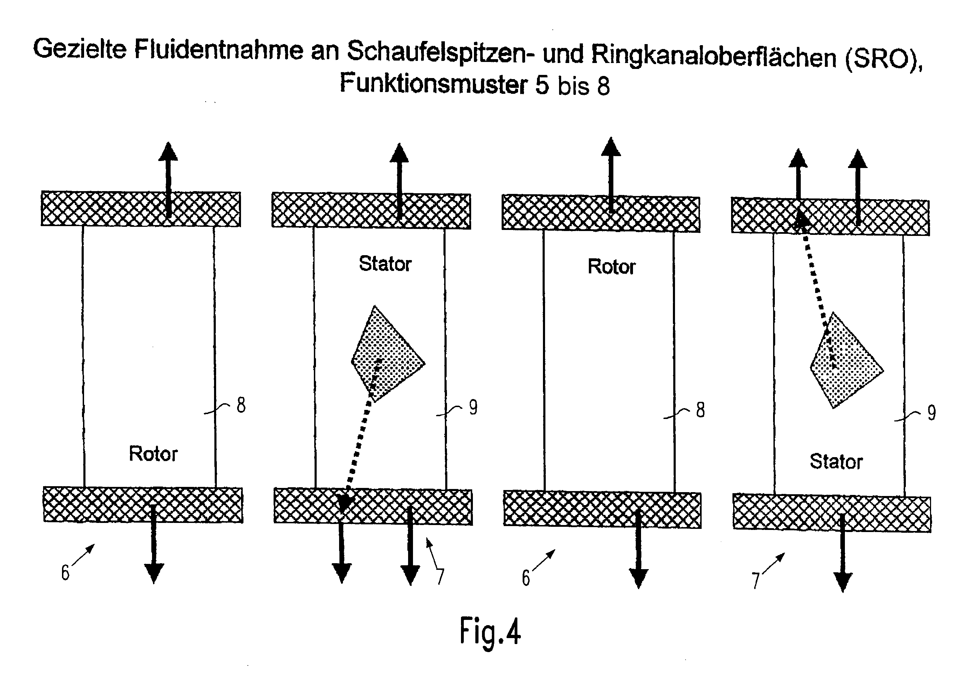

In analoger Weise zeigt die Fig. 4 das erfindungsgemäße Grundkonzept.

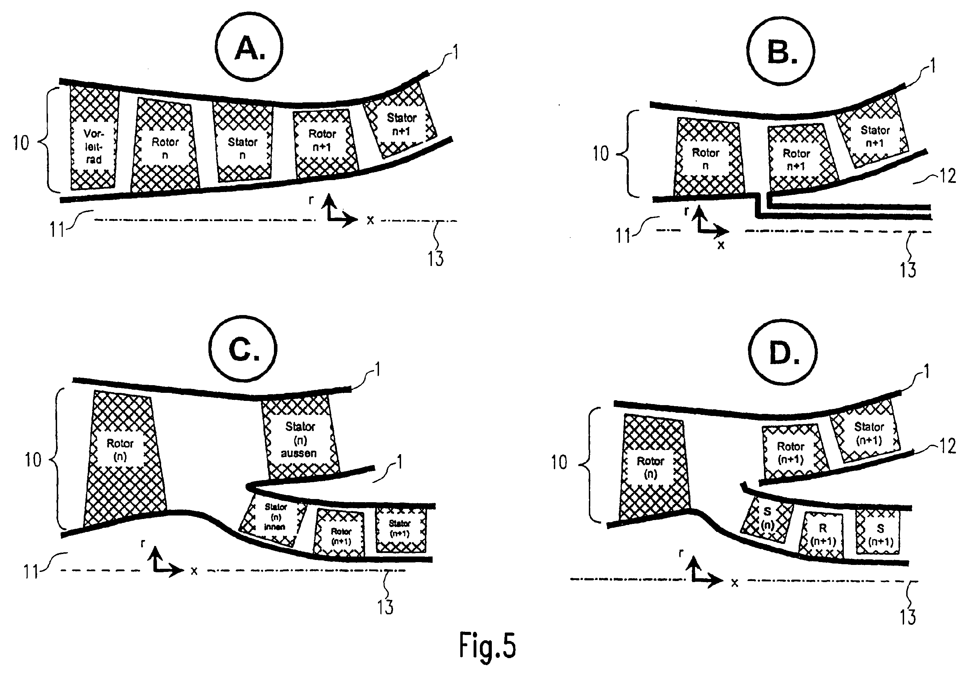

Die Fig. 5 zeigt vier verschiedene Konfigurationen der erfindungsgemäßen Strömungsarbeitsmaschine. Dabei bezeichnet das Bezugszeichen 10 einen von links nach rechts zu durchströmenden Ringkanal, mit dem Bezugszeichen 13 ist die Maschinenachse dargestellt, um welche sich eine Rotortrommel (Nabe) 11 dreht. Bei den in den Fig. 5B und 5D gezeigten Ausführungsbeispielen ist eine weitere Rotortrommel (Nabe) 12 vorgesehen. Die Rotoren, Statoren sowie das Vorleitrad sind jeweils in Fig. 5 beschriftet, es ist jeweils in schematischer Weise eine Schaufel dargestellt.

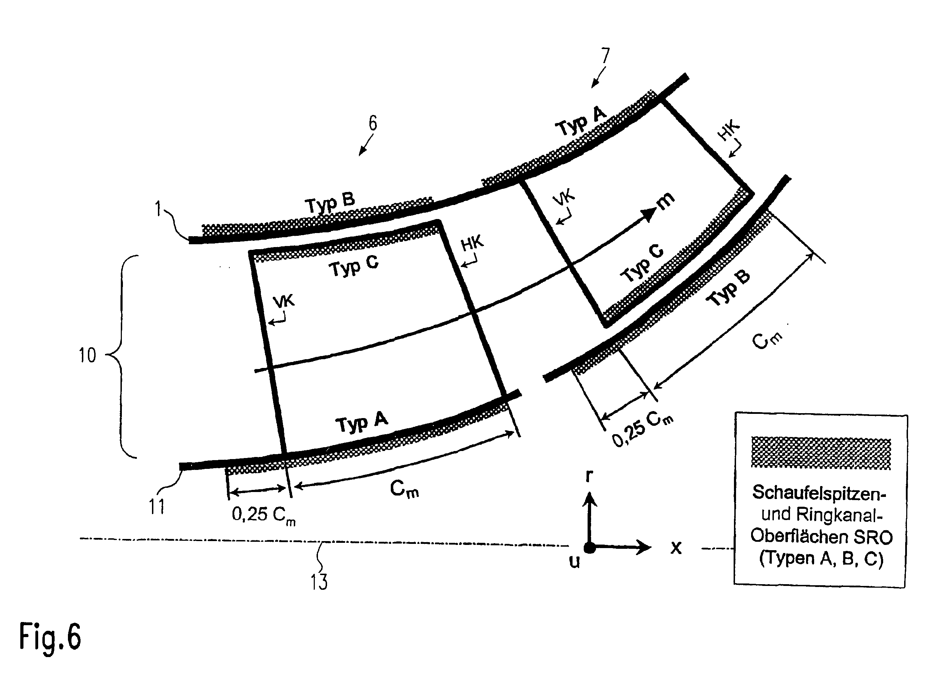

Die Fig. 6 zeigt die Definition der erfindungsgemäßen Schaufelspitzen- und Ringkanaloberflächen (SRO). Dabei sind insgesamt drei Typen dargestellt. Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.

Erfindungsgemäß ergeben sich somit folgende SRO-Typen:

SRO, Typ A: Die Oberflächen sind an der Naben- oder Gehäusekontur des Ringkanals mit fester Verbindung zur Schaufel ausgebildet, wie sie im Fall von Plattformen, Deckbändern, Blisk- und Blingkonfigurationen auftreten, und zwar zwischen der Hinterkantenebene HK und einer Ebene, die sich 25 % der meridionalen Schaufelsehnenlänge Cm vor der Vorderkantenebene VK befindet.

SRO, Typ B: Die Oberflächen sind an Naben- oder Gehäusekonturen des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 25 % der meridionalen Schaufelsehnenlänge Cm vor der Vorderkantenebene VK befindet, ausgebildet.

SRO, Typ C: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

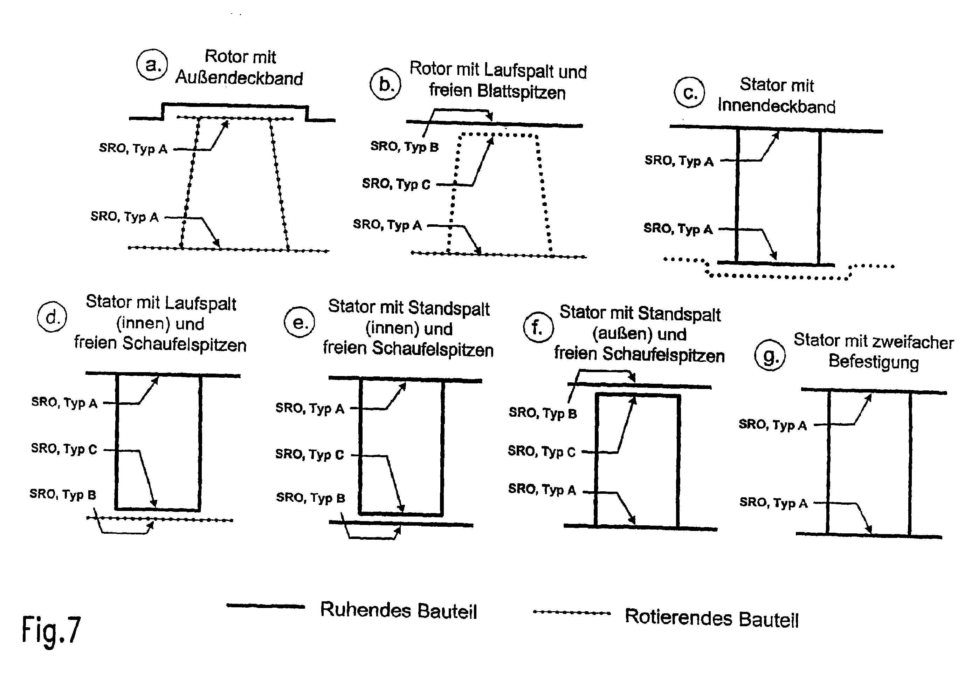

Die Fig. 7 zeigt unterschiedliche Ausführungen von Schaufelreihen der erfindungsgemäßen Strömungsarbeitsmaschine mit einer Kennzeichnung der wiederkehrenden Elemente SRO, Typ A, Typ B, Typ C. Im Einzelnen zeigen dabei die Ausführungsbeispiele Folgendes:

Die Fig. 7a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.

Die Fig. 7b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.

Die Fig. 7c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenen Deckband und einer innerhalb der ruhenden Bauteile rotierenden Rotortrommel.

Die Fig. 7d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.

Aus Fig. 7e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.

Die Fig. 7f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.

Die Fig. 7g verdeutlicht eine Baugruppe, welche aus einem ruhenden Innen- und Außengehäuse besteht, sowie mehreren mit dem Innen- und Außengehäuse verbundenen Statorschaufeln.

Erfindungsgemäß erfolgt die Führung des entnommenen Fluids über Strömungswege an der Peripherie des Ringkanals oder innerhalb von Schaufeln und ihrer umgebenden Bauteile. Erfindungsgemäß wird das Fluid dabei entweder bei freier Strömung oder aber mit Hilfe mindestens eines im Strömungsweg befindlichen Drosselorgans, das unverstellbar oder auch regelbar sein kann, aus dem Ringkanal im Bereich der betroffenen Schaufelreihe herausgeführt. Dieses Abführen des Fluids erfolgt mit dem Ziel, entweder das Fluid vollständig von der Strömungsarbeitsmaschine oder von der die Strömungsarbeitsmaschine einschließenden Gesamtanlage (Fördersystem, Gasturbine oder Triebwerk) zu entfernen, oder das Fluid dem Ringkanal der Strömungsarbeitsmaschine oder der Gesamtanlage wieder zuzuführen.

Die notwendigen Elemente des Strömungsweges können erfindungsgemäß als einfacher Hohlraum, als Ringraum, als Rohrleitung, als Kanal, als Düse oder als Diffusor beliebiger Querschnittsform ausgestaltet sein und werden erfindungsgemäß im Folgenden unter dem Begriff "Kammer" zusammengefasst.

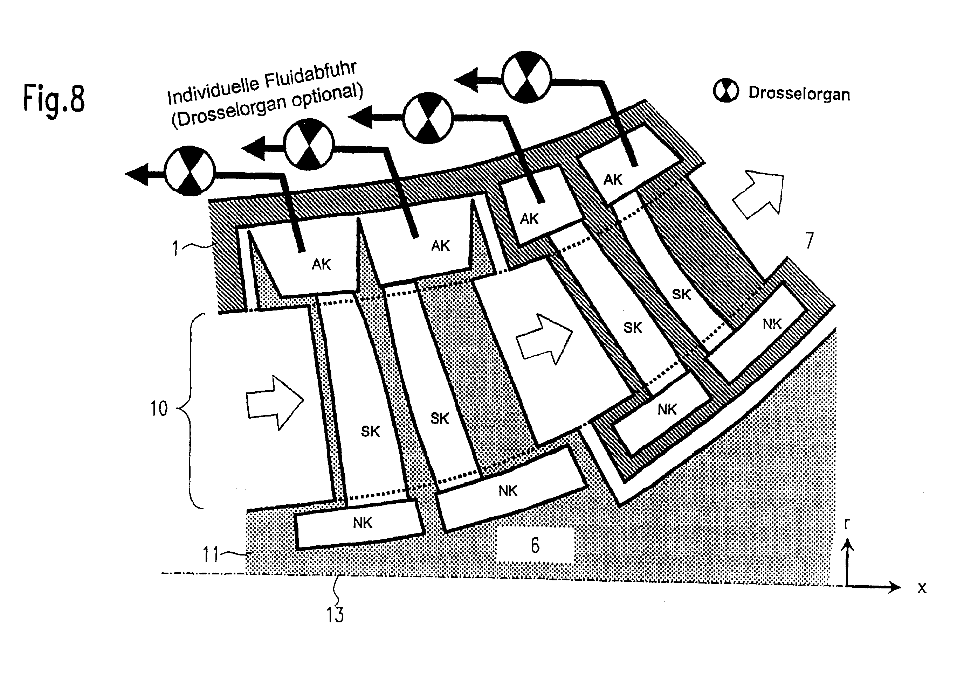

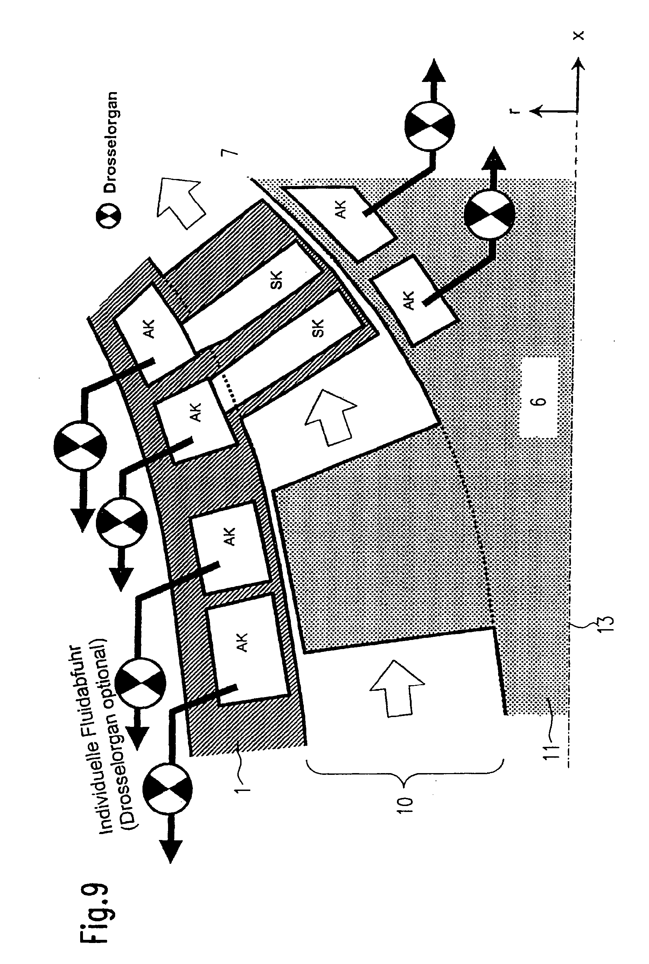

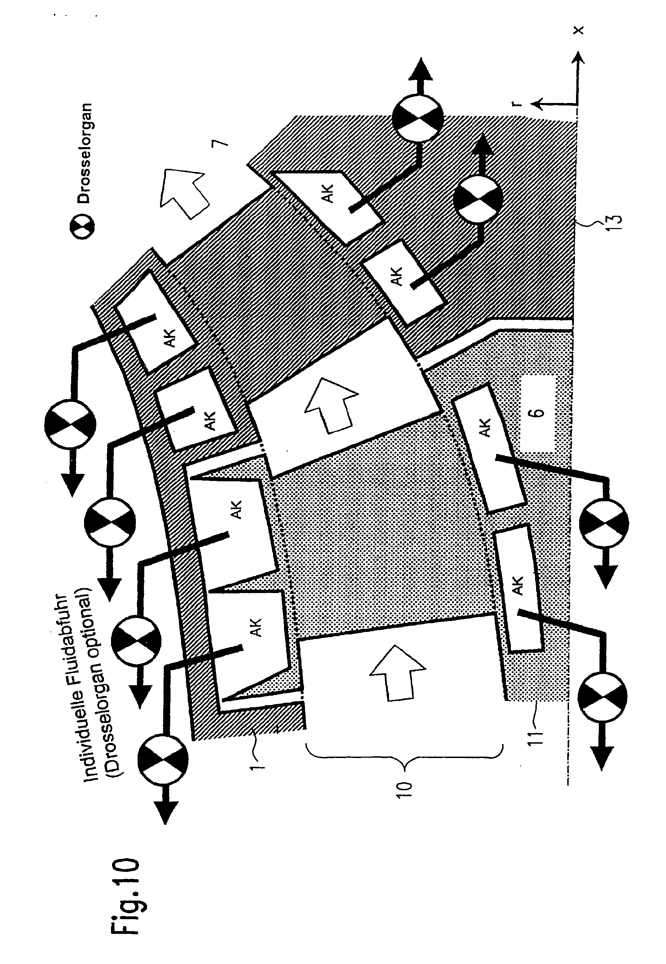

Die Fig. 8 bis 10 zeigen unterschiedliche Ausgestaltungsvarianten der Erfindung mit Konfigurationen, bei welchen Abfuhrkammern (AK), Schaufelinnenkammern (SK) und Nabenkammern (NK) vorgesehen sind.

Im Einzelnen zeigen die Fig. 8 bis 10 Ausgestaltungsvarianten, bei welchen den einzelnen Schaufelreihen jeweils mindestens eine Kammer am oder im Gehäuse zugeordnet ist, durch die Fluid von der Schaufelreihe entfernt wird (Abfuhrkammer AK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Abfuhrkammer AK mit mindestens einer Schaufelinnenkammer SK in Verbindung stehen und von dort Fluid entgegennehmen. Besitzt die Schaufel eine feste Anbindung zur inneren Ringkanalkontur, so kann als letztes Kammerglied des zur Fluidentfernung konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und dieser Fluid zuführt.

Besitzt die Schaufel ein freies Ende mit Radialspalt an der Nabe oder weist die Schaufel keine über die gesamte Schaufelhöhe reichende Schaufelinnenkammer auf, kann zur Fluidentfernung an der Nabe ebenfalls mindestens eine Abfuhrkammer an oder in der Nabe außerhalb des Ringkanals existieren.

Abfuhrkammern und Nabenkammern erstrecken sich über die Gesamtheit oder nur Teile des Maschinenumfangs. Die Abfuhrkammern dienen der Wegleitung des Fluids von der betreffenden Schaufelreihe, wobei die Schaufelinnenkammern und die Nabenkammern Hilfsmittel sind, um den Zugang zu den relevanten Schaufelspitzen- und Ringkanaloberflächen (SRO) der betreffenden Schaufelreihe herzustellen.

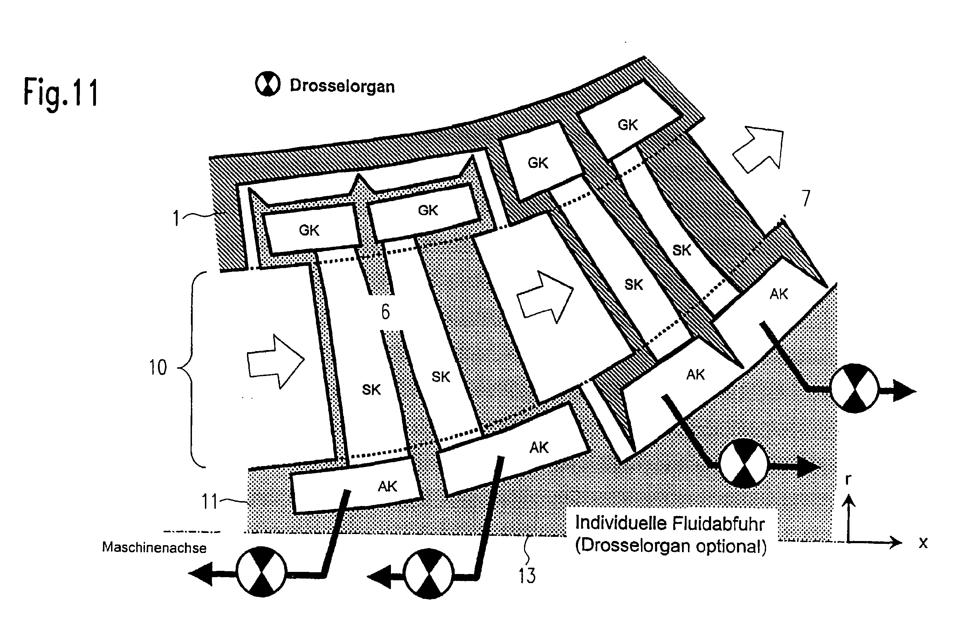

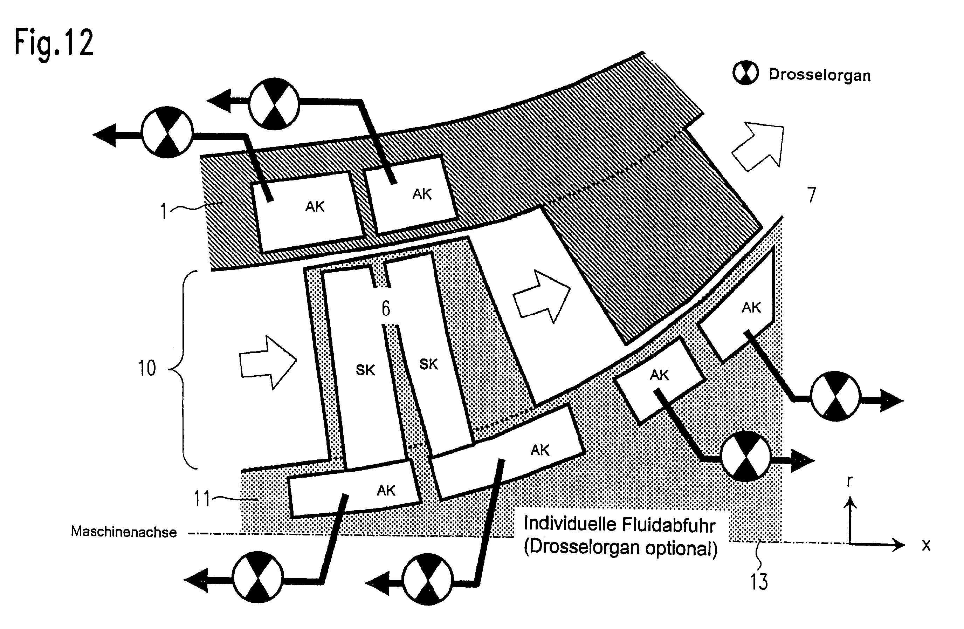

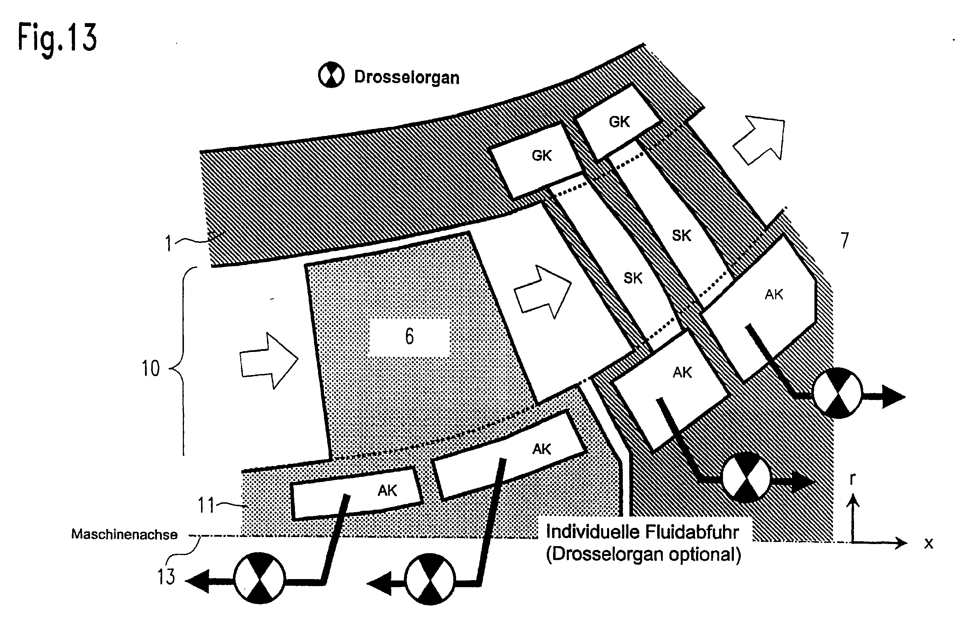

Während in den Fig. 8 bis 10 Ausgestaltungsformen gezeigt wurden, bei welchen mindestens eine Abfuhrkammer am oder im Gehäuse angeordnet ist, zeigen die Fig. 11 bis 13 Ausgestaltungsformen, bei welchen mindestens eine Kammer an oder in der Nabe angeordnet ist, durch die Fluid von der Schaufelreihe entfernt wird (Abfuhrkammer AK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Abfuhrkammer AK mit mindestens einer Schaufelinnenkammer SK in Verbindung stehen und von dort Fluid entgegennehmen. Besitzt die Schaufel eine feste Anbindung zur äußeren Ringkanalkontur, so kann als letztes Kammerglied des zur Fluidentfernung konzipierten Gesamtströmungsweges mindestens eine Kammer am oder im Gehäuse außerhalb des Ringkanals existieren (Gehäusekammer GK), die mit mindestens einer Schaufelinnenkammer SK in Verbindung steht und dieser Fluid zuführt.

Besitzt die Schaufel ein freies Ende mit Radialspalt am Gehäuse oder weist die Schaufel keine über die gesamte Schaufelhöhe reichende Schaufelinnenkammer SK auf, kann zur Fluidentfernung am Gehäuse ebenfalls mindestens eine Abfuhrkammer am oder im Gehäuse außerhalb des Ringkanals existieren.

Die Abfuhrkammern und die Gehäusekammern erstrecken sich über die Gesamtheit oder nur Teile des Umfangs der Strömungsarbeitsmaschine.

Die Abfuhrkammern dienen zur Wegleitung des Fluids von der betreffenden Schaufelreihe. Die Schaufelinnenkammern und die Gehäusekammern sind Hilfsmittel, um den Zugang zu relevanten Schaufelspitzen- und Ringkanaloberflächen (SRO) im Bereich der betreffenden Schaufelreihe herzustellen.

Erfindungsgemäß ist vorgesehen, dass bei einer Schaufelreihe der im Zusammenhang mit den Fig. 8 bis 10 bzw. 11 bis 13 beschriebenen Ausgestaltungsformen an mindestens einer Schaufelspitzen- und Ringkanaloberfläche (SRO) an mindestens einer ihrer Schaufeln und/oder mindestens einem ihrer den Ringkanal begrenzenden Bauteile mindestens eine Fluidentnahmevorrichtung vorgesehen ist, die eine Verbindung zwischen der Schaufelspitzen- und Ringkanaloberfläche (SRO) und einer Abfuhrkammer AK, einer Schaufelinnenkammer SK, einer Nebenkammer NK oder einer Gehäusekammer GK herstellt. Die konstruktive Ausführung der Fluidentnahmevorrichtung erfolgt durch mechanische, chemische oder thermische Materialabtragsverfahren an dem die Schaufelspitzen- und Ringkanaloberfläche (SRO) bildenden Bauteil.

In einer alternativen Ausgestaltung der Erfindung erhält die Fluidentnahmevorrichtung ihre Begrenzungen durch die Kombination mindestens zweier vorbereiteter Einzelbauteile, die lose oder fest zusammengefügt werden.

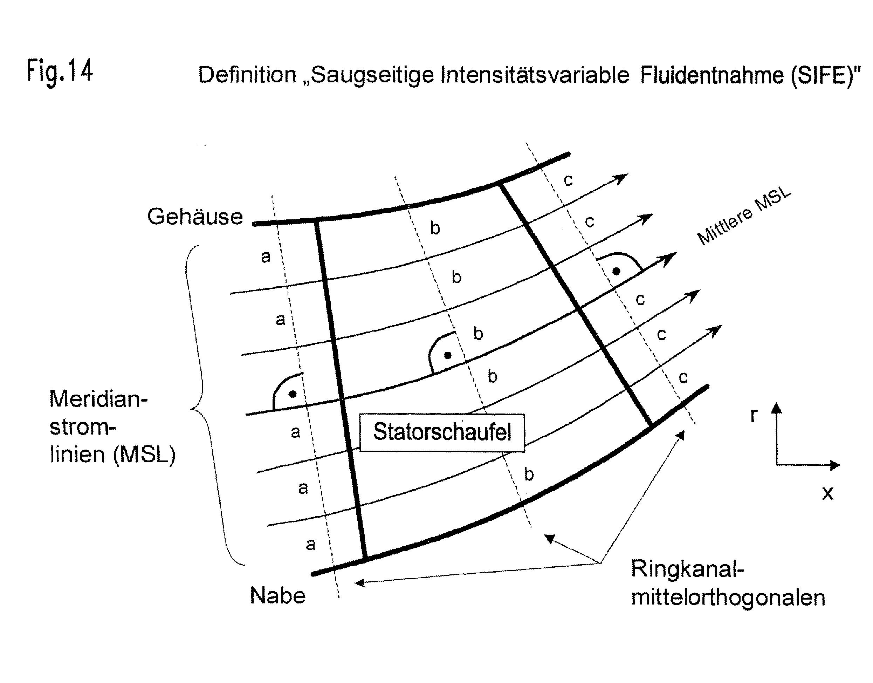

Die Fig. 14 bis 16 zeigen Ausführungsbeispiele der erfindungsgemäßen Vorrichtung zur saugseitigen, intensitätsvariablen Fluidentnahme (SIFE) an einer Statorreihe. Hierbei ist in aerodynamisch kritischen Zonen auf der Schaufelsaugseite eine Formation aus Schlitzen bzw. funktional ähnlichen Ersatzelementen vorgesehen, die eine variable Intensität der Fluidentnahme in meridianstromlinienorthogonaler Richtung ermöglicht.

Die Fluidentnahme geschieht durch eine Anzahl von Öffnungen, die unterschiedlichen Schaufelinnenkammern zugeordnet sein können.

Wie in Fig. 14 dargestellt ist, gilt im Einzelnen das Folgende:

Eine Statorschaufelreihe der Strömungsarbeitsmaschine wird in dem aus Axial- und Radialrichtung gebildeten Koordiantensystem (x, r) betrachtet. Die Festlegung der Vorrichtung zur SIFE orientiert sich an einer Anzahl von Meridianstromlinien, deren Stützstellen aus einer zwischen Nabe und Gehäuse äquidistanten Teilung der Ringkanalmittelorthogonalen hervorgehen. Dies ist in Fig. 14 beispielhaft für je eine Ringkanalmittelorthogonale vor (siehe gleiche Strecken a), innerhalb (siehe gleiche Strecken b) und hinter der Schaufelreihe (siehe gleiche Strecken c) gezeigt.

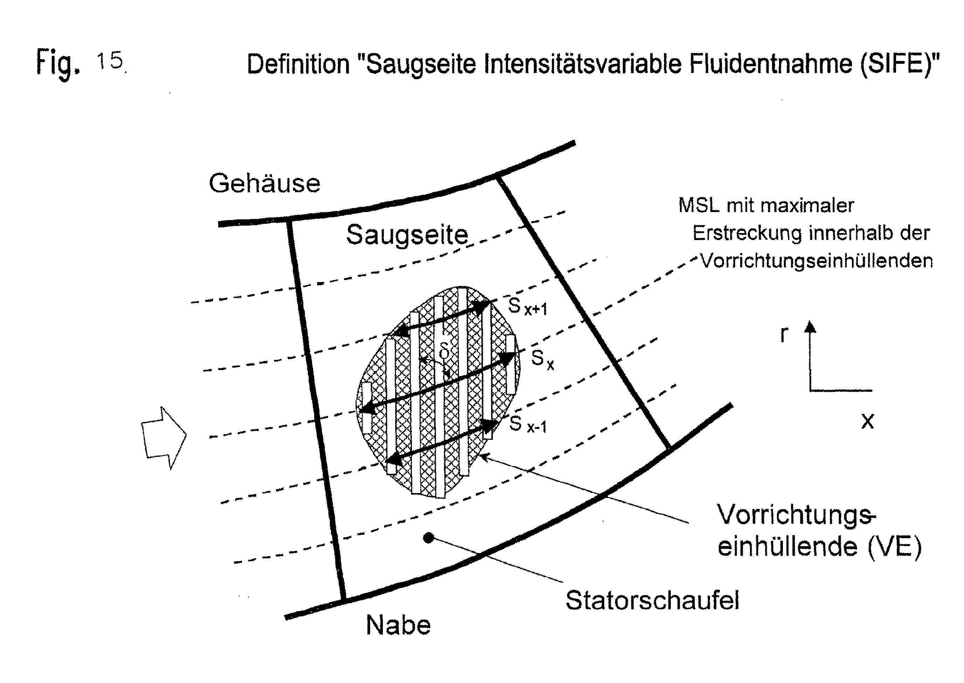

Die Fig. 15 zeigt ein Ausführungsbeispiel der erfindungsgemäßen Vorrichtung zur SIFE. Die Vorrichtung besteht aus einem Verbund von mindestens zwei Öffnungen (N >= 2), die innerhalb eines Teilbereiches der Saugseite mindestens einer Schaufel einer Statorreihe vorgesehen sind. Die von der Vorrichtung eingenommene Zone der Saugseite wird durch die Einhüllende um alle zum Verbund gehörenden Öffnungen beschrieben (Vorrichtungseinhüllende VE). Die Vorrichtung ist so beschaffen, dass entlang einer bestimmten Meridianstromlinie die maximale Meridianerstreckung s (x) vorliegt. Erfindungsgemäß ergibt der Übergang zu benachbarten Meridianstromlinien eine in Richtung des Gehäuses und in Richtung der Nabe stufenweise oder kontinuierlich abnehmende Meridianerstreckung. Von Stromlinie zu Stromlinie gilt folglich:

$$S(x) >= S(x+1) >= ... >= S(x+n) \quad bzw. \quad S(x) >= S(x-1) >= ... >= S(x-n).$$

In der gewählten Darstellung besteht die Vorrichtung aus einer Anzahl von geraden, parallelen Schlitzen. Jedoch kann jeder Schlitz einfach oder mehrfach gekrümmt verlaufen, konstante oder in seiner Längsrichtung veränderliche Breite aufweisen, und am Anfangs- und Endpunkt eine eckige Form oder einen runden (langlochähnlichen) Abschluss besitzen. Zwischen Schlitz und Meridianstromlinie kann ein beliebiger Neigungswinkel delta vorliegen. Die Schlitze führen senkrecht oder schräg zur Saugseitenoberfläche durch das Wandmaterial in eine Schaufelinnenkammer SK.

In einer abgewandelten Form tritt - bei gleichen Regeln hinsichtlich der Anordnung und des Verlaufes an der Saugseitenoberfläche sowie der Beschaffenheit der Oberflächenkanten und Orientierung in der Saugseitenwand - an die Stelle mindestens eines Schlitzes eine ein- oder mehrreihige Formation von Löchern. In einer anderen abgewandelten Form ist - bei gleichen Regeln hinsichtlich der Anordnung und des Verlaufes an der Saugseitenoberfläche - mindestens ein Schlitz als Staueinlauf ausgeformt, **dadurch gekennzeichnet, dass** Fluid unter höchstens 30° zur Saugseitenoberfläche abgeführt wird (siehe Darstellung in Fig. 17, rechts).

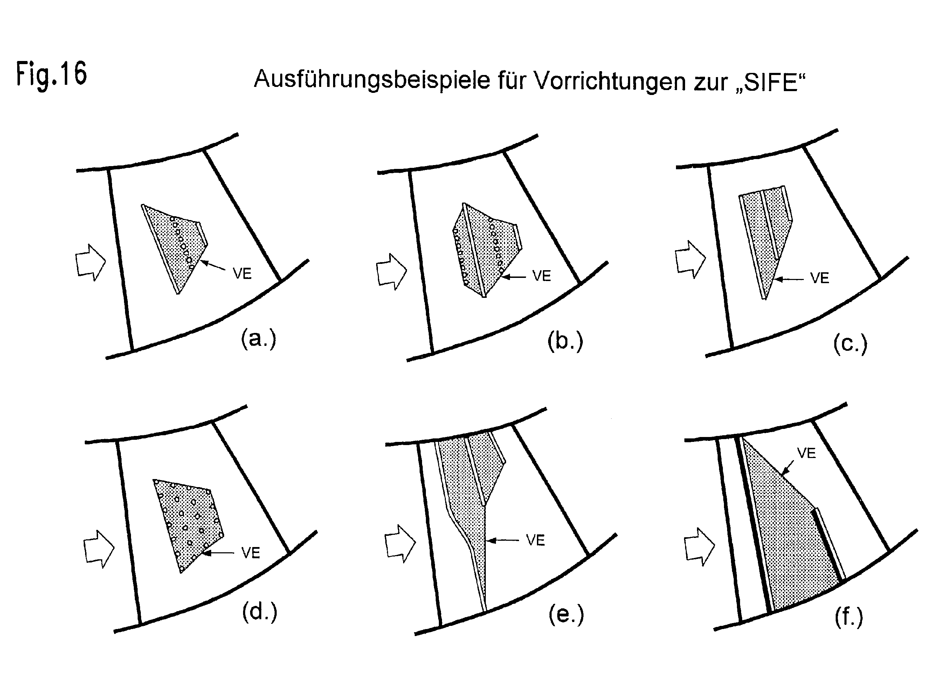

Die Fig. 16 zeigt unterschiedliche Ausführungsvarianten einer Vorrichtung zur SIFE. Im Einzelnen zeigen dabei die Ausführungsbeispiele Folgendes:

Die Fig. 16a zeigt eine Statorbaugruppe, die zur Realisierung der erfindungsgemäßen meridianstromlinienorthogonalen Variation der Fluidentnahmeintensität auf der Saugseite eine Formation aus 2 Schlitzen und einer Lochreihe aufweist. Die Vorrichtung bedeckt erfindungsgemäß nur einen Teil der Saugseite und ist in diesem Anwendungsbeispiel in deren Zentralbereich angeordnet. Der Verbund aus Schlitzen und Löchern ist durch die Vorrichtungseinhüllende VE umgeben und markiert. Es ist ersichtlich, dass die Meridianerstreckung der Vorrichtung hier sowohl in Richtung des Gehäuses als auch in Richtung der Nabe kontinuierlich abnimmt.

Die Fig. 16b zeigt eine gegenüber Fig. 16a abgewandelte erfindungsgemäße Statorbaugruppe, bei der die Schlitz- und Lochelemente eine andere Reihenfolge einnehmen und die Anzahl der Elemente erhöht ist.

Die Fig. 16c zeigt eine erfindungsgemäße Statorbaugruppe, die auf der Saugseite eine Formation aus 3 Schlitzen aufweist. Die Vorrichtung ist in diesem Anwendungsbeispiel primär dem Gehäuse gewandt. Der Verbund der Öffnungen ist durch die Vorrichtungseinhüllende VE umgeben und markiert. Es ist ersichtlich, dass die Meridianerstreckung der Vorrichtung hier in Richtung des Gehäuses stufenhaft auf null sinkt und in Richtung der Nabe kontinuierlich abnimmt.

Die Fig. 16d zeigt eine Statorbaugruppe, die auf der Saugseite eine Formation aus Löchern aufweist. Die Vorrichtung ist in diesem Anwendungsbeispiel im Zentralbereich der Saugseite angeordnet. Die Vorrichtungseinhüllende lässt ersehen, dass die Meridianerstreckung der Vorrichtung in diesem Anwendungsbeispiel sowohl in Richtung des Gehäuses als auch in Richtung der Nabe kontinuierlich abnimmt.

Die Fig. 16e zeigt eine Statorbaugruppe, die auf der Saugseite eine Formation aus 3 Schlitzen aufweist. Die Vorrichtung liegt in diesem Anwendungsbeispiel am Gehäuse. Die Vorrichtungseinhüllende lässt ersehen, dass die Meridianerstreckung der Vorrichtung hier in Richtung der Nabe kontinuierlich abnimmt.

Die Fig. 16f zeigt eine Statorbaugruppe, die auf der Saugseite eine Formation aus 2 Staueinläufen aufweist. Die Vorrichtung liegt in diesem Anwendungsbeispiel an der Nabe. Die Vorrichtungseinhüllende lässt ersehen, dass die Meridianerstreckung der Vorrichtung hier in Richtung des Gehäuses kontinuierlich abnimmt.

Bei der erfindungsgemäßen Strömungsarbeitsmaschine wird somit ein bislang unerreichtes Maß an Grenzschichtbeeinflussung erzielt. Dies ist bei unterschiedlichsten Arten von Strömungsarbeitsmaschinen, wie etwa Bläsern, Verdichtern, Pumpen und Ventilatoren oder auch Propellern und Schiffsschrauben möglich. Je nach Ausführungsvariante sind erfindungsgemäß eine aerodynamische Belastung und eine Strömungsumlenkung möglich, die bis zu 50% über den nach dem Stand der Technik erreichten Werten liegen. Für festgeschriebene Leistungswerte einer Strömungsarbeitsmaschine lässt sich unter Beibehaltung oder Verbesserung des Wirkungsgrades von bis zu 1% die Anzahl der verbauten Teile um etwa 30% gegenüber einer konventionellen Bauweise senken. Dabei sinken die Kosten um 10% bis 15%. Bei Einsatz eines neuen Schaufelkonzeptes im Verdichter eines Flugtriebwerks mit rund 25.000 Pfund Schub ergibt sich erfindungsgemäß eine Reduzierung des spezifischen Kraftstoffverbrauchs von bis zu 0,5% und eine Gewichtsersparnis von rund 5%.

**Bezugszeichenliste**

1    Gehäuse
2    Schaufel
3    Schlitz
4    Schlitz
5    Stator
6    Rotor
7    Stator
8    Rotorschaufel
9    Statorschaufel
10   Ringkanal
11   Rotortrommel (Nabe)
12   Rotortrommel (Nabe)
13   Maschinenachse

**Patentansprüche**

1.  Strömungsarbeitsmaschine mit zumindest einem Rotor (6), der mehrere an einer rotierenden Welle befestigte Rotorschaufeln (8) umfasst, sowie mit einem von einer Nabe (11) und einem Gehäuse (1) gebildeten Ringkanal (10), welcher unter Durchströmung des Rotor (6) und/oder eines Stators (7) von einem Fluid durchströmt wird, wobei Mittel zur Entnahme von Fluid an mindestens einer Schaufel (8,9) einer Schaufelreihe des Rotors (6) und/oder des Stators (7) an aerodynamisch kritischen Orten auf der Saugseite vorgesehen sind,
    wobei sich die Anordnung der Mittel zur Fluidentnahme an Meridianstromlinien orientiert, die aus einer zwischen der Nabe (11) und dem Gehäuse (1) äquidistanten Teilung der Ringkanalmittelorthogonalen hervorgehen,
    wobei jede Ringkanalmittelorthogonale durch eine Senkrechte auf der mittleren Meridianstromlinie des Ringkanals gegeben ist,
    wobei zur gezielten Beeinflussung der dreidimensionalen Strömung die Mittel zur Fluidentnahme nicht punktuell, sondern entlang einer Meridianstromlinie (d.h. in Merdianströmungsrichtung) in einem definierten Bereich S verteilt angelegt sind,
    wobei der Bereich S auf einer Meridianstromlinie ein Maximum Sx annimmt,
    wobei der Bereich S in meridianstromlinienorthogonaler Richtung zu wenigstens einer der Ringkanalwände (Nabe 11 oder Gehäuse 1) hin stufenweise oder kontinuierlich abnimmt und somit eine variable Intensität der Fluidentnahme entlang der Schaufelhöhe zwischen Nabe und Gehäuse ermöglicht ist.

2.  Strömungsarbeitsmaschine nach Anspruch 1, **dadurch gekennzeichnet, dass**
    das zugeführte Fluid durch mindestens zwei Austrittsöffnungen in den Hauptströmungspfad zuführbar ist, wobei die mindestens zwei Austrittsöffnungen in Form von
    zumindest einem Schlitz,
    zumindest einer Reihe von lochartigen Ausnehmungen,
    zumindest einem Staueinlauf,
    zumindest einem Schlitz in Profiltiefenrichtung,
    einer Formation aus geraden oder gekrümmten Schlitzen und/oder
    einer Formation aus mehreren Löchern ausgebildet ist.

**3.** Strömungsarbeitsmaschine nach Anspruch 1 oder 2, **dadurch gekennzeichnet, dass** die Mittel zur Fluidentnahme mit mehreren unterschiedlichen Schaufelinnenkammern verbunden sind.

Fig.2

Fig.1

## Gezielte Fluidentnahme an Schaufelspitzen- und Ringkanaloberflächen (SRO), Funktionsmuster 1 bis 4

Fig.3

## Gezielte Fluidentnahme an Schaufelspitzen- und Ringkanaloberflächen (SRO), Funktionsmuster 5 bis 8

Fig.4

EP 2 249 045 A2

**A.**

10

Vorleitrad | Rotor
n | Stator
n | Rotor
n+1 | Stator
n+1

1

11

13

r

x

**B.**

10

Rotor
n | Rotor
n+1 | Stator
n+1

1

12

11

13

r

x

**C.**

10

Rotor
(n) | Stator
(n)
aussen

Stator
(n)
innen | Rotor
(n+1) | Stator
(n+1)

1

1

11

13

r

x

**D.**

10

Rotor
(n) | Rotor
(n+1) | Stator
(n+1)

S
(n) | R
(n+1) | S
(n+1)

1

12

13

r

x

Fig.5

Schaufelspitzen-
und Ringkanal-
Oberflächen SRO
(Typen A, B, C)

Fig.6

a.) Rotor mit Außendeckband

b.) Rotor mit Laufspalt und freien Blattspitzen

c.) Stator mit Innendeckband

SRO, Typ A

SRO, Typ A

SRO, Typ B

SRO, Typ C

SRO, Typ A

SRO, Typ A

SRO, Typ A

d.) Stator mit Laufspalt (innen) und freien Schaufelspitzen

e.) Stator mit Standspalt (innen) und freien Schaufelspitzen

f.) Stator mit Standspalt (außen) und freien Schaufelspitzen

g.) Stator mit zweifacher Befestigung

SRO, Typ A

SRO, Typ C

SRO, Typ B

SRO, Typ A

SRO, Typ C

SRO, Typ B

SRO, Typ B

SRO, Typ C

SRO, Typ A

SRO, Typ A

SRO, Typ A

——— Ruhendes Bauteil      ·········· Rotierendes Bauteil

Fig.7

EP 2 249 045 A2

Fig.8

Individuelle Fluidabfuhr
(Drosselorgan optional)

⊕ Drosselorgan

EP 2 249 045 A2

**Fig.9**

Individuelle Fluidabfuhr
(Drosselorgan optional)

Drosselorgan

AK

AK

AK

AK

AK

SK

SK

AK

AK

1

7

10

11

6

13

r

x

EP 2 249 045 A2

Fig.10

Individuelle Fluidabfuhr
(Drosselorgan optional)

Drosselorgan

EP 2 249 045 A2

Fig.11

## Fig.12

Drosselorgan

AK

AK

1

7

6

SK  SK

10

AK

AK

AK

11

AK

Maschinenachse

Individuelle Fluidabfuhr
(Drosselorgan optional)

13

r

x

EP 2 249 045 A2

# Fig.13

⊗ **Drosselorgan**

GK

GK

SK

SK

AK

AK

6

AK

AK

1

10

11

13

Maschinenachse

Individuelle Fluidabfuhr
(Drosselorgan optional)

7

r

x

EP 2 249 045 A2

EP 2 249 045 A2

**Fig.14**  Definition „Saugseitige Intensitätsvariable Fluidentnahme (SIFE)"

**Fig. 15**      Definition "Saugseite Intensitätsvariable Fluidentnahme (SIFE)"

Gehäuse

Saugseite

MSL mit maximaler
Erstreckung innerhalb der
Vorrichtungseinhüllenden

$S_{x+1}$

$S_x$

$S_{x-1}$

r

x

Vorrichtungseinhüllende (VE)

Statorschaufel

Nabe

EP 2 249 045 A2

# Fig.16 Ausführungsbeispiele für Vorrichtungen zur „SIFE"

(a.)

(b.)

(c.)

(d.)

(e.)

(f.)

EP 2 249 045 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2870957 A
- US 2720356 A
- US 3694102 A
- US 3993414 A
- US 5904470 A
- US 5480284 A

**In der Beschreibung aufgeführte Nicht-Patentliteratur**

- **Schuler et al.** Design, Analysis, Fabrication and Test of an Aspirated Fan Stage. *ASME Paper 2000-GT-618*
- **Merchant et al.** Aerodynamic Design and Analysis of a High Pressure Ratio Aspirated Compressor Stage. *ASME Paper 2000-GT-619*